# EUROPÄISCHE PATENTSCHRIFT

(11) **EP 2 581 274 B1**
(45) Veröffentlichungstag und Bekanntmachung des Hinweises auf die Patenterteilung: **06.05.2015**
(21) Anmeldenummer: 13150641.2
(22) Anmeldetag: 14.06.2010
(51) Int. Cl.: B60R 21/13

(54) **Überrollkörper für ein Überrollschutzsystem eines Kraftfahrzeuges**
Roll-bar for a rollover protection system of a motor vehicle
Arceau de sécurité pour un système de protection contre les tonneaux d'un véhicule automobile

(43) Veröffentlichungstag der Anmeldung: 17.04.2013
(62) Teilanmeldung aus: 10165870.6
(73) Patentinhaber: Metalsa Automotive GmbH, 51702 Bergneustadt (DE)
(72) Erfinder: Helsper, Michael, 57078 Siegen (DE); Theus, Katrin, 51647 Gummersbach (DE); Beki, Gürkan, 51766 Engelskirchen (DE)
(74) Vertreter: Rebbereh, Cornelia

(56) Entgegenhaltungen:
- EP-A1- 2 100 780
- GB-A- 2 280 456

## Beschreibung

Die Erfindung betrifft einen Überrollkörper für ein Überrollschutzsystem eines Kraftfahrzeuges, mit einem Profilkörper sowie ein Überrollschutzsystem für ein Kraftfahrzeug mit einem zwischen einer abgesenkten Ruhelage und einer aufgestellten Überschlagsposition verstellbaren Überrollkörper.

Überrollschutzsysteme der eingangs genannten Art sowie hierfür verwendete Überrollkörper sind in vielfältigen Ausgestaltungen aus dem Stand der Technik, bspw. aus der EP 2100 780 A1 und GB 2 280 456 A bekannt. Die Überrollschutzsysteme dienen bei Fahrzeugen wie Cabriolets, welche keine starre Dachstruktur besitzen, zum Schutz der Insassen, indem sie bei einem Überschlag einen Überlebensraum für die Insassen aufspannen. In der Vergangenheit eingesetzte starre Überrollbügel werden dabei bei modernen Fahrzeugen vermehrt durch sogenannte aktive Systeme ersetzt, bei denen ein Überrollkörper in der Ruhelage im Wesentlichen nicht sichtbar angeordnet ist und erst im Gefahrenfall, also bei einem drohenden Überschlag in eine Überschlagsposition aufgestellt wird, um zu verhindern, dass die Fahrzeuginsassen durch das sich überschlagende Fahrzeug erdrückt werden.

Moderne Lösungen weisen dabei typischer Weise für jeden Sitz einen in einem fahrzeugfesten Kassettengehäuse linear geführten Überrollkörper auf, der in der Ruheposition entgegen einer Vorspannkraft durch eine Haltevorrichtung in einer abgesenkten Position gehalten wird und im Überschlagsfall in eine Überschlagsposition bringbar ist.

Bekannte Überrollkörper existierender Überrollschutzsysteme weisen jedoch den Nachteil auf, dass sie die gestiegenen Anforderungen der Kraftfahrzeughersteller an die geforderten Deformationswege, die das Überrollschutzsystem bei einer definierten Kraft bereitstellen muss, um die bei einem Überschlag von außen auf das System wirkende Energie definiert abbauen zu können, oftmals nicht mehr erfüllen.

Der Erfindung liegt daher die Aufgabe zugrunde, einen Überrollkörper sowie ein Überrollschutzsystem mit einem Überrollkörper bereitzustellen, wobei bei möglichst geringem Bauraum ein ausreichender Deformationswege zur Verfügung steht.

Die Erfindung löst die Aufgabe, durch einen Überrollkörper mit den Merkmalen des Anspruchs 1. Eine vorteilhafte Weiterbildung der Erfindung ist in dem abhängigen Anspruch 2 angegeben.

Erfindungsgemäß ist der Profilkörper als Doppelkammerprofil mit vorgegebenen, sich zumindest abschnittsweise in Längsachsenrichtung erstreckenden Deformationsbereichen ausgebildet. Als Doppelkammerprofil werden dabei im Rahmen der Erfindung solche Profilkörperverstanden, welche im Querschnitt derart geformt sind, dass sie einen hohlen Innenraum gegenüber dem den Profilkörper umgebenden Außenraum abgrenzen, wobei der Innenraum nicht vollständig ringförmig abgeschlossen sein muss. Gemäß der Erfindung ist dabei vorgesehen, dass sich an dem Doppelkammerprofil in Längsachsenrichtung definierte Deformationsbereiche erstrecken, welche im Lastfall, d. h. im Falle eines Überschlags, die Art und den Umfang der Deformation aufgrund ihrer Konstruktion bereits vorgeben. Die Anordnung der Deformationsbereiche legt somit im Vorhinein den Deformationsverlauf des Überrollkörpers im Falle eines Überschlags und der hiermit einhergehenden Belastung des Überrollkörpers fest. Durch eine entsprechende Ausgestaltung der Deformationsbereiche lässt sich somit der Deformationsweg des Überrollkörpers an die fahrzeugherstellerseitig geforderten Anforderungen anpassen. Die Deformationsbereiche unterscheiden sich dabei konstruktiv von den an diese Bereiche angrenzenden Bereichen.

Die Ausgestaltung des Doppelkammerprofils kann in beliebiger Weise erfolgen, wobei, wie bereits eingangs dargelegt, auch die Verwendung von Doppelkammerprofilen denkbar ist, deren Innenraum nicht vollständig durch das Doppelkammerprofil abgegrenzt ist. Durch diese konstruktive Ausgestaltung, nämlich die im Querschnitt vorliegenden Öffnungen im Profil können bereits definierte Deformationsbereiche geschaffen werden, die im Lastfall als Faltzonen dienen. Diese Erfindung ermöglicht es, das Doppelkammerprofil kammerabhängig in unterschiedliche Funktionsbereiche einzuteilen, wobei bspw. eine Kammer zur Deformation geeignet ist, wohingegen eine andere Kammer des Doppelkammerprofils die für den Überrollschutz notwendige Stabilität bietet. Darüber hinaus kann bei einer Ausgestaltung der Erfindung, bei der alle Kammern einen Deformationsweg bereitstellen, die die Kammern voneinander abgrenzenden bspw. Stege Bereiche zur Erhöhung des Deformationswiderstandes genutzt werden. Das Doppelkammerprofil lässt sich besonders einfach und kostengünstig herstellen und ermöglicht darüber hinaus die Herstellung eines Überrollkörpers mit einem ausreichend großen Deformationsweg, wobei gleichzeitig die für den Überrollschutz geforderte Stabilität gewährleistet wird.

Die Ausgestaltung der Deformationsbereiche an dem Doppelkammerprofil kann grundsätzlich in beliebiger Weise erfolgen. Diese erstrecken sich in Längsachsenrichtung des Doppelkammerprofils, wobei nicht zwingend erforderlich ist, dass sich diese über die gesamte Länge des Doppelkammerprofils erstrecken. So ist auch eine Ausgestaltung möglich, wonach in Längsachsenrichtung betrachtet Abschnitte des Doppelkammerprofils frei von Deformationsbereichen sind.

Gemäß der Erfindung sind die Deformationsbereiche durch Abschnitte gebildet, die im Querschnitt eine verminderte Materialstärke aufweisen. Demgemäß weist das Doppelkammerprofil im Querschnitt keine über alle Bereiche gleiche Materialstärke auf, sondern in vordefinierten Bereichen liegt die Materialstärke unter der in den übrigen Bereichen. Im Lastfäll erfolgt eine Verformung des Doppelkammerprofils zunächst an den Bereichen geringerer Materialstärke, so dass sich die an diese Bereiche angrenzenden Abschnitte des Doppelkammerprofils relativ zueinander verschieben, wobei die Verstellbarkeit den durch das Doppelkammerprofil bereitgestellten Deformationsweg bestimmt. Insofern ermöglichen die Abschnitte verminderter Materialstärke eine definierte Faltung des Doppelkammerprofils zum Zwecke des Energieabbaus.

Die Abschnitte geringerer Materialstärke erstrecken sich im Bereich einer Biegelinie, welche quer zur Längsachse des Doppelkammerprofils verläuft. Die Biegelinie stellt dabei den Bereich des Doppelkammerprofils dar, um die sich der Überrollkörper in Folge seiner unter Belastung bestehenden Tendenz zum Flachdrücken verbiegen kann. Die Anordnung der Deformationsbereiche im Bereich der Biegelinie gewährleistet dabei im besonderen Maße, dass es bei einem Flachdrücken des Doppelkammerprofils, bei dem der Überrollkörper aus einer im Wesentlichen senkrecht zum Fahrzeugboden verlaufenden Stellung in Richtung einer parallelen Ausrichtung verbogen wird, nicht zu dessen Abreißen und somit zu einem Vollversagen des Bauteils kommen kann. Im Falle einer alternativen Anordnung, bei der die Bereiche geringerer Materialstärke im Abstand von der Biegelinie verlaufen, dienen die damit geschwächten Bereiche dazu, große Deformationswege zum Abbau der auf das System einwirkenden Energie bereit zu stellen.

Gemäß der Erfindung verlaufen die Abschnitte geringerer Materialstärke des Doppelkammerprofils im Bereich der Biegelinie zueinander abgewinkelt und/oder gebogen. Diese Ausgestaltung der Erfindung, wonach die Abschnitte verminderter Materialstärke beiderseits der Biegelinie eine korrespondierende Orientierung zu dieser aufweisen, gewährleistet in besonderem Maße, dass sich das Doppelkammerprofil in der vorgegebenen Weise im Lastfall deformiert. Hierdurch kann in besonderer Weise verhindert werden, dass die Deformation in nicht vorbestimmter Weise stattfindet, wodurch das Deformationsverhalten von den Vorgaben abweichen könnte.

Grundsätzlich kann das Doppelkammerprofil in beliebiger Weise in das Überrollschutzsystem integriert werden. Nach einer besonders vorteilhaften Ausgestaltung der Erfindung sind an dem Doppelkammerprofil jedoch Mittel zur Anordnung einer Aufnahme oder zur Befestigung von Anbauteilen ausgebildet. Diese Ausgestaltung der Erfindung ermöglicht eine besonders einfache und kostengünstige Montage des Überrollschutzsystems und erlaubt es darüber hinaus, auf ergänzende Bauteile zu verzichten, welche bspw. die Anbindung von Verkleidungselementen ermöglichen.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Überrollkörpers;
- Fig. 2: eine Schnittansicht des Überrollkörpers von Fig. 1 im nicht deformierten Zustand;
- Fig. 3: eine Schnittansicht des Überrollkörpers von Fig. 1 im deformierten Zustand;
- Fig. 4: eine perspektivische Ansicht des Überrollkörpers von Fig. 1 in der Einbaulage an einer Aufnahme;
- Fig. 5: eine Schnittansicht der Aufnahme von Fig. 4 und
- Fig. 6: eine Schnittansicht des in der Aufnahme angeordneten Überrollkörpers von Fig. 4.

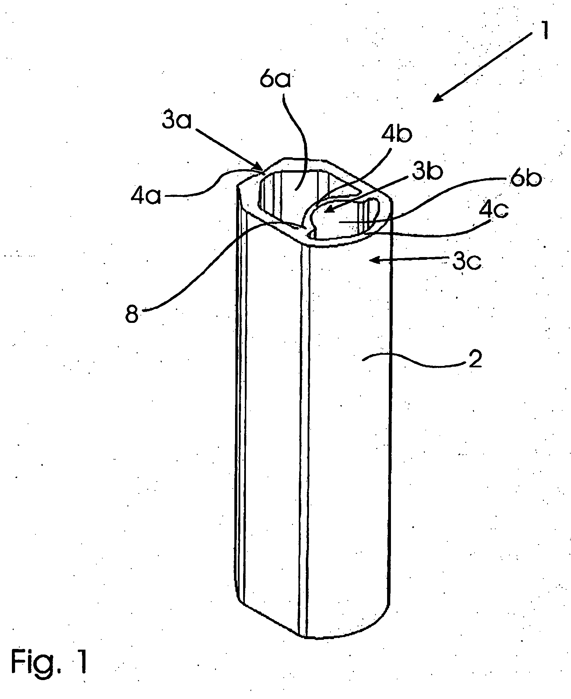

In Fig. 1 ist in einer perspektivischen Ansicht einer ersten Ausführungsform eines durch ein Doppelkammerprofil 2 gebildeten Profilkörper 1 dargestellt. Ein Steg 8 teilt das Doppelkammerprofil in zwei Kammern 6a, 6b auf.

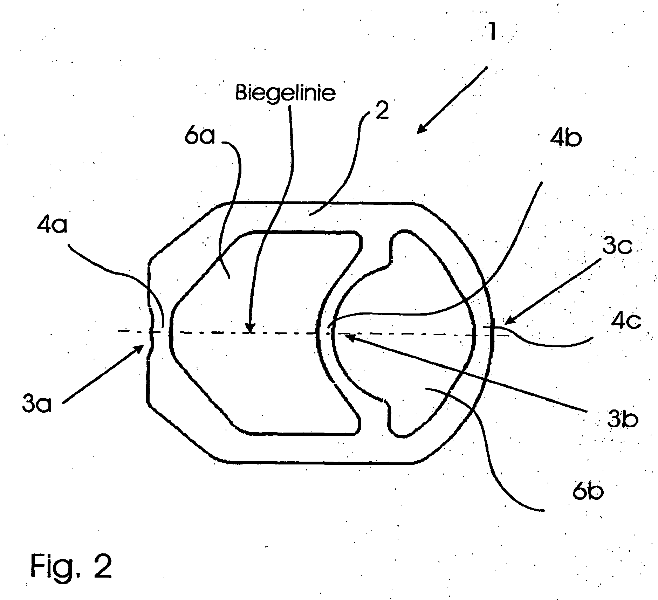

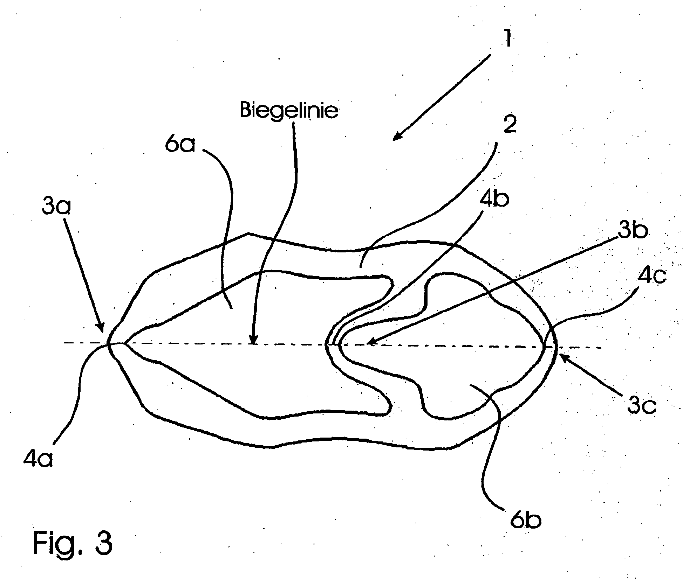

Die Deformationseigenschaften des Doppelkammerprofils 2 werden durch Deformationsbereiche 3a, 3b, 3c vorgegeben, die durch Abschnitte 4a, 4b, 4c geringerer Materialstärke gebildet sind. Die Abschnitte 4a, 4b, 4c verlaufen dabei - mit Bezug auf eine in Fig. 2 und 3 dargestellte Biegelinie - nicht senkrecht zur Biegelinie sondern sind gegenüber dieser abgewinkelt, bzw. gekrümmt, so dass eine definierte Deformation des Doppelkammerprofils 2 zum Abbau der beim Überschlag auftretenden Energie gewährleistet ist.

Im Lastfall kommt es zu einem Zusammendrücken des Doppelkammerprofils 2 aus der in Fig. 2 dargestellten Form in die in Fig. 3 dargestellte deformierte Form, wobei die Ränder des Doppelkammerprofils 2 in Richtung auf die Biegelinie verschoben sind.

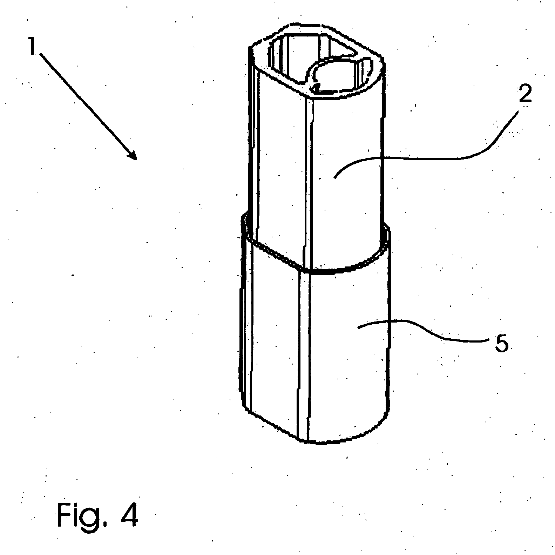

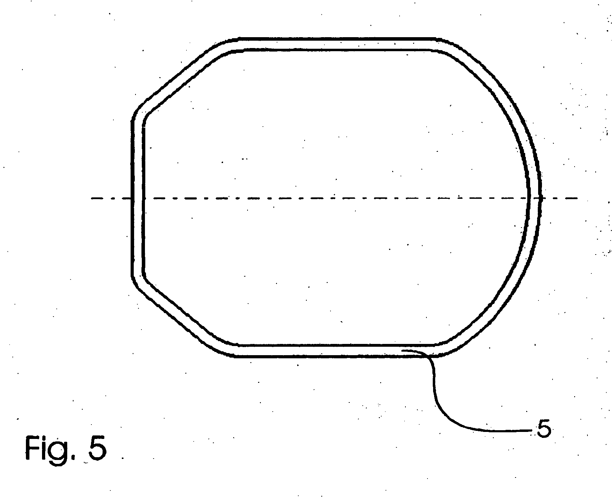

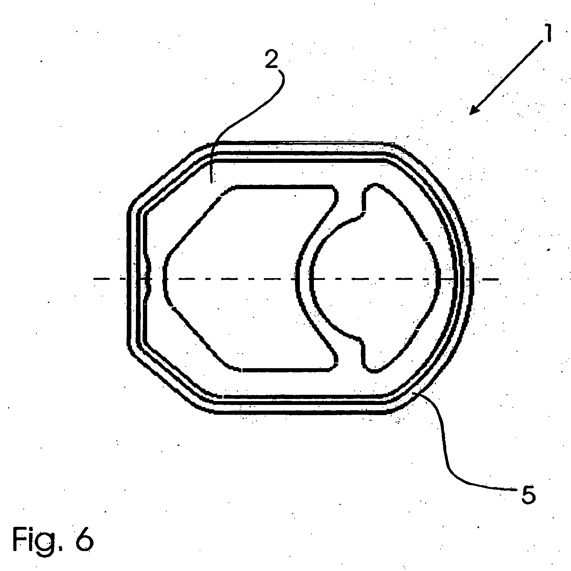

Zur Anordnung des Doppelkammerprofils 2 in einem hier nicht dargestellten Überrollschutzsystem dient eine geometrisch an das Doppelkammprofil 2 angepasste Aufnahme 5, deren Innenquerschnitt an den Außenquerschnitt des Doppelkammerprofils 2 angepasst ist, so dass das Doppelkammerprofil 2 flächig an der Innenseite der Aufnahme 5 anliegt. Die Aufnahme 5 verhindert in ergänzender Weise, dass es nicht zu einem Versagen der Struktur beim Biegen, insbesondere Flachdrücken des Doppelkammerprofils 2 kommt (vgl. Fig. 4-6).

## Patentansprüche

1. Überrollkörper für ein Überrollschutzsystem eines Kraftfahrzeuges, mit einem Profilkörper der als Doppelkammerprofil (2) mit vorgegebenen, sich zumindest abschnittsweise in Länganchsenrichtung erstreckenden Deformationsbereichen (3a, 3b, 3c) ausgebildet ist,
die durch drei Abschnitte (4a, 4b, 4c) mit im Querschnitt verminderter Materialstärke gebildet sind, die im Bereich einer quer zur Doppelkammer- Längsachse laufenden Biegelinie des Doppelkammerprofils (2) angeordnet sind, **dadurch gekennzeichnet, dass** die drei Abschnitte (4a, 4b, 4c) geringerer Materialstärke des Doppelkammerprofils (2) nicht senkrecht zur Biegelinie verlaufen, sondern gegenüber dieser sowie zueinander abgewinkelt und/oder gebogen verlaufen.

2. Überrollkörper nach Anspruch 1, **dadurch gekennzeichnet, dass** an dem Doppelkammerprofil (2) Mittel zur Anordnung einer Aufnahme oder zur Befestigung von Anbauteilen ausgebildet sind.

## Claims

1. A rollover body for a rollover protection system of a motor vehicle with a profile body, which is designed as a double-chamber profile (2) with specified deformation areas (3a, 3b, 3c) extending at least in sections in the longitudinal axial direction, which are formed by three sections (4a, 4b, 4c) with a material thickness that is reduced in cross-section, which are arranged in the area of a bending line of the double-chamber profile (2) running transversally to the longitudinal axis,
**characterized in that**
the three sections (4a, 4b, 4c) with the smaller material thickness of the double-chamber profile (2) do not progress perpendicularly to the bending line but rather progress at an angle and/or in a curved manner with respect to it and to each other.

2. The rollover body according to claim 1, **characterized in that** means for the arrangement of a receiver or for the fastening of attachment parts are designed on the double-chamber profile (2).

## Revendications

1. Corps de protection contre les tonneaux pour un système de protection contre les tonneaux d'un véhicule automobile, avec un corps profilé qui est constitué en tant que profilé à chambre double (2) avec des zones de déformation (3a, 3b, 3c) prédéfinies qui s'étendent au moins par tronçons dans la direction d'axe longitudinal, qui sont formées par trois tronçons (4a, 4b, 4c) avec une épaisseur de matériau qui diminue dans la section transversale qui sont disposés dans la zone d'une ligne de flexion du profilé à chambre double (2) qui est transversale à l'axe longitudinal,
**caractérisé en ce que**
les trois tronçons (4a, 4b, 4c) d'épaisseur de matériau plus faible du profilé à chambre double (2) ne sont pas perpendiculaires à la ligne de flexion mais sont coudés et/ou courbés par rapport à cette ligne ainsi que rapport aux autres.

2. Corps de protection contre les tonneaux selon la revendication 1, **caractérisé en ce que** des moyens sont constitués sur le profilé à chambre double (2) pour l'aménagement d'une réception ou pour la fixation de pièces rapportées.
